# FASCICULE DE BREVET EUROPEEN

(11) **EP 4 452 427 B1**
(45) Date de publication et mention de la délivrance du brevet: **09.12.2026**
(21) Numéro de dépôt: 22835697.8
(22) Date de dépôt: 12.12.2022
(51) Int. Cl.: A63B 49/035, A63B 60/14, A63B 102/02, A63B 102/04, A63B 49/08

(54) **MANCHON POUR RAQUETTE**
HÜLLE FÜR SCHLÄGER
SLEEVE FOR RACKET

(30) Priorité: 21.12.2021 FR 2114116
(43) Date de publication de la demande: 30.10.2024
(73) Titulaire: Ragni, Jean-Christophe, 06800 Cagnes sur Mer (FR)
(72) Inventeur: Ragni, Jean-Christophe, 06800 Cagnes sur Mer (FR)
(74) Mandataire: Hautier IP
(86) Numéro de dépôt international: PCT/EP2022/085411
(87) Numéro de publication internationale: WO 2023/117543

(56) Documents cités:
- WO-A1-2006/130900
- AU-A1- 2017 272 263
- US-A- 2 984 486
- US-A1- 2017 182 395

## Description

### DOMAINE TECHNIQUE

La présente invention concerne le domaine des équipements pour la pratique de sport de raquettes. Il peut s'agir du tennis, du badminton, ou encore du squash, sans que cela ne soit limitatif.

### ETAT DE LA TECHNIQUE

La manipulation de la raquette est un point essentiel pour la bonne pratique d'un sport de raquette. Le contact entre la main et le manche de la raquette doit être suffisamment performant en termes de confort, de prise et d'absorption de la transpiration.

Il est connu d'équiper le manche d'une raquette d'un revêtement amovible qui présente les qualités requises pour les bonnes performances de la manipulation par le joueur. Cela permet aussi de protéger le revêtement d'origine du manche de la raquette. Le plus souvent, ces revêtements amovibles sont des bandes agrippantes que le joueur enroule progressivement autour du manche de la raquette.

Cette solution mérite une certaine dextérité pour assurer une régularité de pose et occasionne un temps conséquent. En effet, la bande doit d'abord être séparée d'un film plastique qui la protège et, tout en maintenant la bande bien déployée (une petite partie plastique est retirée pour laisser apparaitre une partie adhésive permettant de positionner le départ de la bande), il faut l'enrouler progressivement sur le manche, puis en fixer l'extrémité distale par une bande adhésive. La tension appliquée sur la bande durant l'enroulement doit être suffisamment constante pour que les propriétés du revêtement amovible soient régulières tout au long du manche.

Un objet de la présente invention est donc de proposer une alternative aux techniques connues pour former un revêtement agrippant amovible autour du manche d'une raquette.

Par ailleurs, on connaît de la publication brevet WO 2006/130900 A1 une méthode pour mettre en place un manchon autour d'un manche. Une pluralité de guides porte le manchon pour faciliter son enfilage sur le manche, en limitant le frottement. En fin d'opération, les guides sont retirés par glissement. Le montage du manchon s'avère peu simple par cette solution.

Un objet de la présente invention est de proposer une technique plus pratique pour la pose d'un manchon.

Les autres objets, caractéristiques et avantages de la présente invention apparaîtront à l'examen de la description suivante et des dessins d'accompagnement. Il est entendu que d'autres avantages peuvent être incorporés.

### RESUME DE L'INVENTION

Pour atteindre cet objectif, on utilise un manchon pour manche d'accessoire pour le sport, tel qu'une raquette, comprenant un corps creux dont le volume intérieur est débouchant à une première extrémité et une deuxième extrémité du corps creux.

De manière avantageuse, le corps creux comprend au moins une zone de moindre résistance mécanique s'étendant depuis l'une parmi la première extrémité et la deuxième extrémité, en direction de l'autre parmi la première extrémité et la deuxième extrémité. Eventuellement, la zone de moindre résistance mécanique s'étend sur l'intégralité de la longueur entre la première extrémité et la deuxième extrémité de sorte à les joindre.

Ainsi, on dispose d'un revêtement agrippant pour raquette ou autre accessoire qui est facilement retiré du manche de la raquette ou autre accessoire. Au-delà du caractère pratique de cet enlèvement, cela permet aussi de disposer d'un manchon s'appliquant fermement sur le manche tout en préservant son amovibilité. En effet, même si la cohésion et l'adhérence du manchon sur le manche sont élevées, il reste possible de retirer aisément le manchon.

Alors qu'on aurait pu penser que la réalisation d'un revêtement amovible sous forme de manchon serait soit trop difficile à poser, soit trop difficile à retirer, ou les deux, on propose ici une solution à au moins l'une de ces difficultés.

Suivant un aspect, on présente un procédé d'utilisation d'un manchon selon la revendication 1, le procédé comprenant :
- une pose du corps creux autour et au contact d'un manche ;
- ultérieurement, un retrait du corps creux relativement au manche, comprenant une rupture de l'au moins une zone de moindre résistance mécanique de sorte à ouvrir le corps creux.

Est aussi présenté, de manière séparable, un outil selon la revendication 9, comprenant une pluralité de branches et un dispositif de déplacement des branches configuré pour faire varier leur écartement au moins entre une position de rapprochement des branches et une position d'éloignement des branches. Cet outil est configuré pour recevoir en enfilement autour des branches un manchon comprenant un corps creux, avec ou sans zone(s) de moindre résistance mécanique, et pour faire varier la dimension radiale du corps creux en variant l'écartement des branches. Un autre aspect est un procédé de montage d'un manchon comprenant un corps creux, avec ou sans zone(s) de moindre résistance mécanique sur le manche d'une raquette en utilisant un tel outil.

Un autre aspect, non revendiqué, est une raquette équipée d'un manchon, notamment pour une raquette de tennis, de squash ou de badminton, ou encore pour tout accessoire d'un autre sport de raquette ou de tout sport nécessitant l'utilisation d'un accessoire à prise manuelle pour lequel l'application d'un moyen agrippant est utile. Un autre aspect est un système comprenant un outil et un manchon.

### BREVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
La figure 1 représente une vue en perspective d'un exemple de manchon se présentant sous forme d'un corps creux.
La figure 2A représente un exemple d'outil dont les branches sont en position de rapprochement.
La figure 2B représente cet outil lorsque les branches sont en position d'éloignement.
La figure 3A représente une phase de mise en place d'un manchon sur l'outil par enfilage.
La figure 3B représente une phase de mise en place de l'outil portant le manchon sur un manche de raquette.
La figure 3C représente la mise en contact progressive du manchon et du manche, avec retrait de l'outil.
La figure 3D reflète un manchon posé sur un manche de raquette.
La figure 3E illustre le cas d'un manchon doté d'une partie fragile pour faciliter son retrait du manche.

Les dessins sont donnés à titre d'exemples et ne sont pas limitatifs de l'invention. Ils constituent des représentations schématiques de principe destinées à faciliter la compréhension de l'invention. Ils sont donnés dans le cadre d'un exemple d'application à une raquette, typiquement de tennis, mais ces illustrations peuvent être interprétées mutatis mutandis pour une application à tout type d'accessoires de sport présentant un manche.

### DESCRIPTION DÉTAILLÉE

Avant d'entamer une revue détaillée de modes de réalisation de l'invention, sont énoncées ci-après des caractéristiques optionnelles qui peuvent éventuellement être utilisées en association ou alternativement :
- la zone de moindre résistance mécanique 3a, 3b comprend au moins une ligne de piqures dans l'épaisseur du corps creux 1 ;
- la zone de moindre résistance mécanique 3a, 3b comprend deux lignes de piqures parallèles entre-elles définissant une bande frangible 4 ;
- le corps creux 1 comprend une languette 5 de traction de la bande frangible 4 ;
- la zone de moindre résistance mécanique 3a, 3b est rectiligne ;
- le corps creux 1 est un cylindre ;
- le corps creux 1 est à base de matériau polymère ;
- la pose du manchon comprend :
- selon le procédé de l'invention, la pose du manchon comprend :
   - une utilisation d'un outil 10 comprenant la pluralité de branches 11 et un dispositif de déplacement des branches configuré pour faire varier leur écartement au moins entre une position de rapprochement des branches 11 et une position d'éloignement des branches 11 ;
   - dans la position de rapprochement des branches 11, une mise en place du corps creux 1 autour et au contact des branches 11 ;
   - un passage des branches 11 dans la position d'éloignement produisant une expansion radiale du corps creux 1 ;
   - un enfilement des branches 11 autour du manche 21 tout en laissant en place le corps creux 1 sur les branches 11 ;
   - une réduction de l'écartement des branches 11, puis une mise en contact du corps creux et du manche de manière progressive durant un mouvement de retrait des branches 11 relativement au manche 21 ;
- on utilise un outil 10 dont le dispositif de déplacement des branches 11 comprend au moins deux bras 12 manipulables reliés aux branches 11 par un système de transmission de mouvement 13.

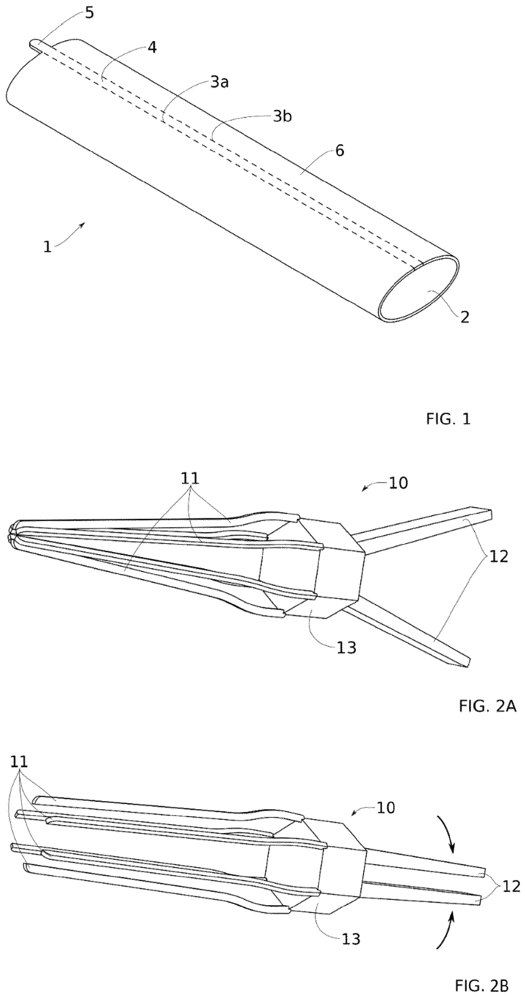

La figure 1 reflète un exemple de réalisation d'un manchon selon l'invention. Ce dernier comprend ou consiste en un corps 1 présentant une dimension longue qui peut être dirigée suivant la dimension longue du manche 21 d'une raquette 20. Le corps 1 est creux si bien qu'il comporte un trou débouchant à une première extrémité et à une deuxième extrémité, ces deux extrémités étant opposées suivant la dimension longue du corps 1. Le volume intérieur du corps 1 définit une surface interne 2 destinée à s'appliquer sur la surface extérieure d'un manche de raquette. Géométriquement, le corps a une section radiale fermée de sorte à s'appliquer tout autour du manche 21 de raquette 20.

Avantageusement, la longueur du corps creux 1 est équivalente à celle du manche 21 de la raquette 20 à équiper. Selon une possibilité, on réalise plusieurs tailles de manchon chacune adaptée à une taille de manche.

Il est entendu que le manchon peut comprendre d'autres éléments que le corps creux 1, par exemple une bague de renfort de fixation à une extrémité du corps 1.

Le corps creux 1 présente avantageusement une forme cylindrique lorsqu'il n'est pas sollicité. De préférence, il est suffisamment élastique pour pouvoir être étendu radialement lors d'une phase de montage, puis rétracté et mis à la forme du manche 21 de raquette 20 lors de son application sur cette dernière. De préférence, la section interne du corps creux 1 au repos est inférieure à la section externe du manche 21 de la raquette 20 ; de cette façon, le corps creux 1 est sollicité en extension radiale lorsqu'il est en position sur le manche 21. Ainsi, il s'applique parfaitement sur ce dernier de sorte à former un ensemble cohérent. En particulier, il n'y a avantageusement pas de mobilité relative entre le manchon et le manche 21 de raquette 20 en position d'utilisation.

Selon une possibilité, le corps creux 1 est en une seule pièce venue d'une seule matière. Il est de préférence en matériau polymère, et notamment il peut être constitué en polyuréthane ou être à base de polyuréthane.

L'épaisseur du corps creux 1 est de préférence supérieure ou égale à 1,6 mm et/ou inférieure ou égale à 2,6 mm.

Le manchon constitue un organe amovible dont la surface externe 6 forme la portion de contact avec la main du joueur. De préférence, la surface externe a des propriétés agrippantes, par exemple par la présence de reliefs en creux ou en saillie (qui peuvent être formés dans la matière polymère du corps creux 1). La surface externe 6 peut en outre être poreuse, de sorte à accroître des propriétés d'absorption de la transpiration. Par ailleurs, l'invention assure une parfaite application du manchon sur le manche et peut en prendre la forme. Par exemple, si le manche comporte à l'origine des reliefs, permettant typiquement une meilleure tenue dans la main, le manchon adoptera, par déformation lors de son application, le même relief.

Dans le mode de réalisation illustré à la figure 1, le corps 1 comprend une zone de moindre résistance mécanique. Il est possible de former une seule zone ou plus de deux zones. Chaque zone de moindre résistance mécanique est le lieu d'une concentration de contraintes plus importante relativement aux autres endroits du corps. Cela peut s'effectuer alternativement ou cumulativement par une diminution de l'épaisseur du corps à ce niveau, par l'emploi, à ce niveau, d'une matière moins résistante à la rupture ou encore par des piqûres dans la matière du corps de sorte à former une série de trous traversant son épaisseur. Ainsi, pour une solution mécanique donnée, cette zone est plus favorable à une rupture.

Dans la représentation de la figure 1, une première partie d'une zone de faiblesse 3a est réalisée par une pluralité de piqûres se succédant entre la première extrémité est la deuxième extrémité du corps 1. Suivant une possibilité, conforme à l'illustration, la pluralité de piqûres est organisée suivant une ligne, de préférence rectiligne, entre les deux extrémités. Toujours de préférence, la direction de la ligne est parallèle à l'axe longitudinal du corps 1.

Eventuellement, une zone de faiblesse peut être formée par une seule ligne de piqures. Suivant une possibilité, les piqûres présentent un pas régulier d'une dimension comprise entre 0,5 et deux fois la largeur des piqûres.

Un exemple de formation des piqûres consiste à obtenir le corps creux 1, par exemple par extrusion, et à le rapporter sur une machine assurant le piquage.

Toujours dans le cas de l'illustration de la figure 1, une deuxième partie de zone de moindre résistance 3b est représentée. Avantageusement, la deuxième ligne est parallèle à la première. L'ensemble réalise de préférence une bande 4 délimitée latéralement par les deux zones de faiblesse 3a, 3b. Suivant un exemple, la largeur de la bande 4 est supérieure ou égale à 3 mm et/ou inférieure ou égale à 10 mm.

Cette disposition n'est pas limitative et il est aussi possible de disposer de parties de zones de faiblesse plus éloignées les unes des autres.

On comprend que là où les zones de faiblesse permettent, lorsqu'une certaine sollicitation, supérieure à la résistance à la rupture des zones de faiblesse, est appliquée par l'utilisateur, de rompre la continuité du corps creux 1 si bien qu'il ne forme plus une forme fermée. Ainsi, il peut être aisément retiré du manche 21 de raquette 20. Il est à noter qu'il peut suffire de disposer d'une zone de faiblesse sur une portion limitée de la longueur du manchon, cette zone de faiblesse pouvant être suffisante pour créer une amorce de rupture se propageant dans le reste du manchon. Par exemple, la longueur de la zone de faiblesse peut être inférieure ou égale à 50 % de la longueur du manchon.

Pour faciliter l'application de cette sollicitation, le corps 1 comporte de préférence une languette 5. Cette dernière est avantageusement disposée au niveau de l'une des extrémités du corps 1. Dans le cas de la formation d'une bande 4, la languette 5 peut être réalisée dans la continuité de cette bande. On comprend qu'une traction sur la languette 5 induit un effort important sur les premières piqûres des zones de faiblesse conduisant à amorcer la rupture de la bande 4 qui est ainsi frangible.

Le terme languette s'entend de toute protrusion susceptible de former une zone de préhension pour un utilisateur, de sorte à opérer une traction. Dans le cas représenté, la languette 5 est réalisée dans la matière du corps. Bien entendu, la languette 5 pourrait être rapportée sur ce dernier, par exemple par collage.

Comme indiqué précédemment, le manchon est destiné à être appliqué sur le manche 21 d'une raquette 20. Et sa dimension radiale est de préférence inférieure à celle du manche 21. De ce fait, il est utile de disposer d'un outil de mise en place permettant une extension radiale du manchon au-delà de la dimension radiale du manche 21 pour réaliser une insertion autour du manche, et permettant, par la suite, une rétractation du manchon pour fournir une application sur le manche 21.

À cet effet, les figures 2A et 2B fournissent une illustration d'un outil 10. Ce dernier comporte une pluralité de branches 11 aptes à recevoir, en enfilement, le manchon de sorte à ce que la surface interne 2 de ce dernier s'applique sur chaque branche. L'illustration reflète six branches régulièrement espacées. Néanmoins, deux branches peuvent suffire, par exemple diamétralement opposées. Dans ce cas, les branches 11 présentent avantageusement une surface d'application du manchon plus importante, notamment avec une section en arc de cercle pouvant aller jusqu'à un demi-cercle.

La figure 2A présente une position de rapprochement des branches 11 configurée pour permettre d'enfiler le corps creux 1 sur l'outil 10. De préférence, dans cette position, les branches 11 forment, à leurs extrémités distales, un nez et les branches 11 peuvent y être jointives.

On réalise ainsi un support allant en s'évasant depuis le nez. De préférence, dans la position de rapprochement des branches, ces dernières peuvent permettre d'enfiler le corps creux du manchon sans offrir de résistance de frottement au moins sur une portion de la longueur des branches 11 en partant de leur extrémité distale ; en particulier, le diamètre intérieur du corps creux est de préférence plus grand que la section extérieure de la surface de contact formée par les branches au moins sur une partie de leur longueur en partant de leur extrémité distale.

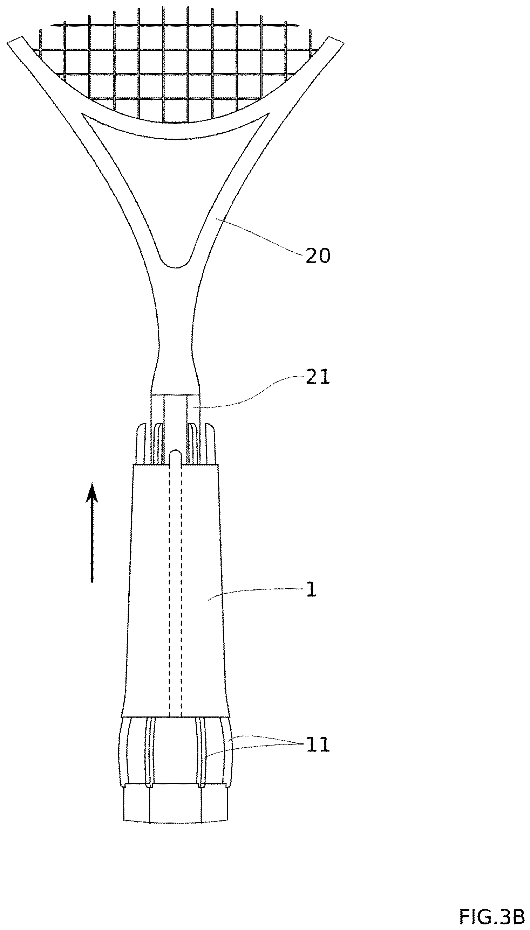

La figure 2B reflète une position d'éloignement des branches 11. Dans cet exemple, l'extrémité de branches 11 est déplacée radialement de sorte à ouvrir le nez de l'outil. Suivant une possibilité, la position d'éloignement est telle que les branches 11 sont parallèles entre elles. Comme illustré, elles peuvent cependant présenter une forme non rectiligne, notamment pour faire varier la force d'écartement du corps creux 1 le long des branches 11. Suivant une possibilité, dans la position d'éloignement, tel que visible dans la figure 3B, la section intérieure délimitée par les branches est supérieure à la section du manchon, si bien que l'outil peut être enfilé autour du manche sans rencontrer de résistance mécanique, et en particulier sans contact de frottements entre le manche et les branches.

Suivant un exemple, les branches 11 sont métalliques.

Pour passer de la position de rapprochement à la position d'éloignement, et inversement, l'outil présente un dispositif de déplacement des branches 11. On comprend que ce déplacement est simultané, les branches étant mobilisées en même temps de manière équivalente pour s'écarter les unes des autres. Ce dispositif est illustré de manière schématique aux figures 2A et 2B. L'actionnement peut être exercé par deux bras 12 manipulables par l'utilisateur. Suivant une possibilité, les bras 12 sont montés pivotants. Ainsi, à l'instar d'une pince, l'exercice d'un effort de rapprochement des bras 12 engendre, par un système de transmission de mouvement 13, un mouvement des branches 11. Ce mouvement peut être dirigé dans le sens de l'éloignement ou dans le sens du rapprochement, suivant les modalités de la transmission de mouvement. Ainsi, dans l'exemple représenté, un rapprochement des bras 12 produit un écartement des tiges. Une situation inverse est possible, comme une pince ou une paire de ciseaux.

De préférence, la transmission de mouvement opère une démultiplication de sorte qu'un angle limité de pression de la part de l'utilisateur engendre un déplacement plus ample des branches. Par ailleurs, cela permet également d'écarter des branches suivant une amplitude suffisante pour assurer une application d'un manchon sur des manches de diamètres différents. De préférence, l'expansion radiale du manchon produite par les branches est identique sur toute sa longueur. La transmission de mouvement peut être opérée par tout moyen mécanique. Cela peut comprendre une entablure (ce qui est aisé à réaliser, notamment lorsqu'il n'y a que deux branches 11), des éléments d'engrenage, des surfaces inclinées coopérante d'expansion radiale des branches 11. Par ailleurs, le recours à des bras 12 n'est pas indispensable ; par exemple, un élément de poussée suivant la direction longitudinale peut permettre d'exercer un mouvement d'avant en arrière, et inversement, sur un dispositif d'expansion radiale des branches 11, par exemple par des surfaces inclinées coopérantes

On donne maintenant un exemple de modalités d'utilisation du manchon, pour en réaliser la pose, puis le retrait.

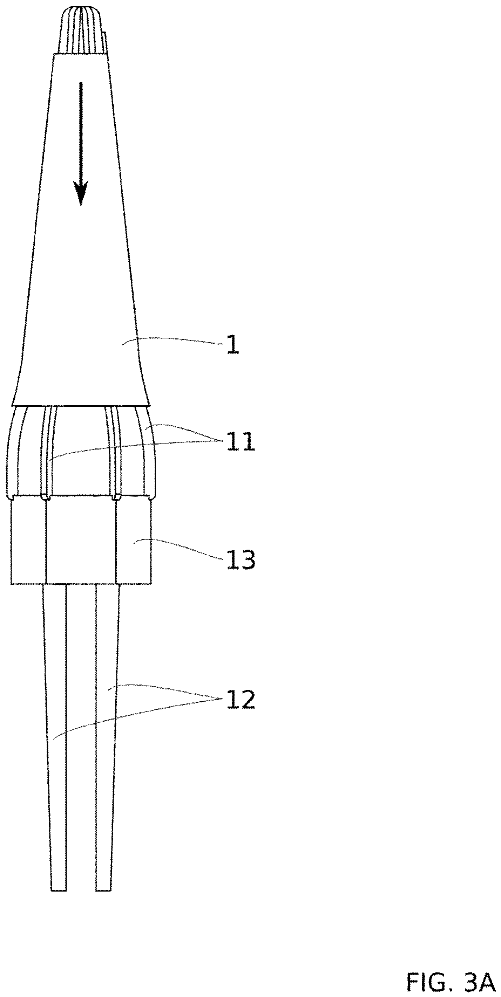

À la figure 3A, le corps creux 1 est enfilé suivant la direction de la flèche sur les branches 11, depuis l'extrémité distale de ces dernières, l'outil étant dans la position de rapprochement des branches 11. De préférence, les branches 11 ont une surface peu adhérente, notamment lorsqu'elles sont métalliques, de sorte à proposer une faible résistance à cette opération d'enfilage. De préférence, cette surface est lisse de sorte à pouvoir retirer l'appareil aisément au cours de l'installation du manchon sur le manche. Tant qu'il est maintenu sur les branches, le manchon n'applique pas de pression sur le manche, ce qui facilite l'enfilage.

La figure 3B reflète que l'outil a été placé dans la position d'éloignement des branches 11 ce qui a conduit à étendre radialement le corps creux 1 de manière élastique. Cette extension radiale est telle que le manchon peut être enfilé sur le manche 21 de la raquette 20, suivant la direction de la flèche de la figure 3B.

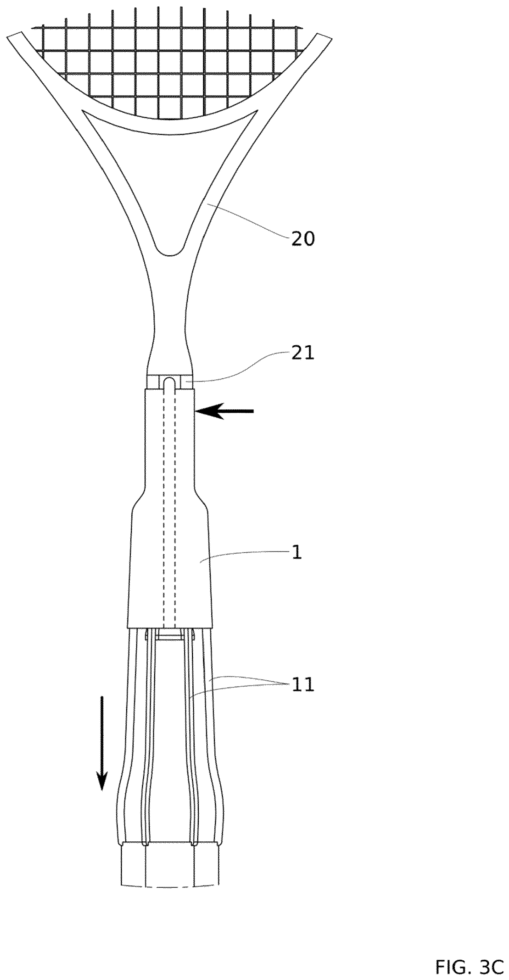

Lorsque la position relative du manche du manchon adéquat est atteinte, l'outil 10 est progressivement retiré, en suivant la direction de la flèche de la figure 3C. Éventuellement, à l'amorce de ce mouvement, l'opérateur exerce une force de rétention de l'extrémité distale du manchon, de sorte à le retenir sur le manche 21, tel que schématisé par la flèche sur cette figure. Comme représenté à la figure 3C, le retrait progressif de l'outil 10 produit l'application progressive de la surface interne du corps creux 1 sur la surface externe du manche 21.

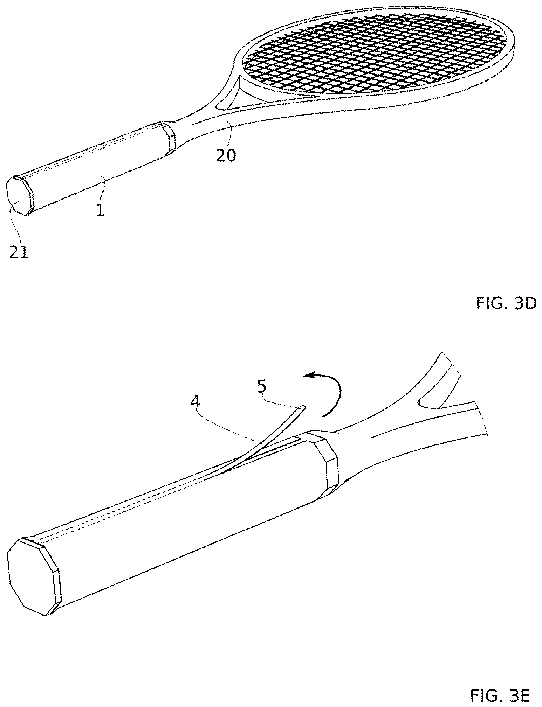

On atteint ainsi in fine la configuration d'utilisation de la raquette 20 représentée à la figure 3D.

Le joueur peut utiliser la raquette 20 jusqu'à ce qu'il souhaite retirer le manchon, par exemple pour le remplacer s'il est usé. À cet effet, comme le montre la figure 3E, il sollicite la ou les zones de faiblesse pour les rompre et ouvrir le manchon, en détendant latéralement le corps creux 1 qui ne s'applique alors plus du tout ou moins sur le manche 21. Typiquement, lorsque le manchon est équipé d'une bande 4, une traction sur la languette 5 suffit à amorcer cette rupture et à la faire progresser. Lorsque la zone de faiblesse parcourt toute la dimension longitudinale du manchon, cette traction est exercée sur cette zone jusqu'à l'extrémité opposée du corps 1. Si la zone de faiblesse est plus courte que la longueur du manchon, l'amorce de rupture occasionnée par la traction depuis l'une des extrémités du manchon sur la zone de faiblesse permet de propager la rupture jusqu'à l'autre extrémité en continuant d'exercer un effort de traction sur le corps 1.

Si le manchon n'est pas équipé de zones de moindre résistance mécanique, l'opérateur peut, même si cela est moins aisé, opérer un effort longitudinal conduisant à retirer progressivement le manchon, par exemple en tirant sur l'extrémité du corps creux 1 située à l'extrémité distale du manche 21.

L'invention n'est pas limitée aux modes de réalisations précédemment décrits.

### REFERENCES NUMERIQUES

1. Corps creux
2. Surface interne
3a. Partie de zone de moindre résistance
3b. Partie de zone de moindre résistance
4. Bande
5. Languette
6. Surface externe
10. Outil
11. Branche
12. Bras
13. Système de transmission
20. Raquette
21. Manche

## Revendications

1. Procédé d'utilisation d'un manchon pour manche (21) d'accessoire de sport tel qu'une raquette (20), le manche (21) comprenant une dimension radiale, le manchon comprenant un corps creux (1) dont le volume intérieur est débouchant à une première extrémité et une deuxième extrémité du corps creux (1), le procédé comprenant en outre une pose du corps creux (1) autour et au contact d'un manche (21), dans lequel la pose comprend :
• une utilisation d'un outil (10) conforme à l'une des revendications 9 à 14 comprenant une pluralité de branches (11) et un dispositif de déplacement des branches configuré pour faire varier simultanément leur écartement au moins entre une position de rapprochement des branches (11) et une position d'éloignement des branches (11) ; puis
• dans la position de rapprochement des branches (11), une mise en place du corps creux (1) autour et au contact des branches (11) ; puis
• un passage des branches (11) dans la position d'éloignement, avant d'enfiler le manchon sur le manche (21), produisant une expansion radiale du corps creux (1) au-delà de la dimension radiale du manche (21) ; puis
• un enfilement des branches (11) autour du manche (21) tout en laissant en place le corps creux (1) sur les branches (11) dans la position d'éloignement ; puis
• une réduction de l'écartement des branches (11), puis une mise en contact du corps creux et du manche de manière progressive durant un mouvement de retrait simultané des branches (11) relativement au manche (21).

2. Procédé selon la revendication précédente, dans lequel on exerce une force de rétention de l'extrémité distale du manchon à l'amorce du mouvement de retrait des branches (11) relativement au manche (21), de sorte à retenir le manchon sur le manche (21).

3. Procédé selon l'une quelconque des revendications précédentes, dans lequel l'enfilement des branches (11) autour du manche (21) est réalisé sans contact entre le manche et les branches (11).

4. Procédé selon l'une quelconque des revendications précédentes, dans lequel on utilise un manchon dans lequel le corps creux (1) comprend au moins une zone de moindre résistance mécanique (3a,3b) s'étendant depuis l'une parmi la première extrémité et la deuxième extrémité en direction de l'autre parmi la première extrémité et la deuxième extrémité,
le procédé comprenant, ultérieurement à la mise en contact, un retrait du corps creux (1) relativement au manche (21), comprenant une rupture de l'au moins une zone de moindre résistance mécanique (3a, 3b) de sorte à ouvrir le corps creux (1).

5. Procédé selon la revendication précédente, dans lequel on utilise un manchon dans lequel la zone de moindre résistance mécanique (3a, 3b) comprend au moins une ligne de piqûres dans l'épaisseur du corps creux (1).

6. Procédé selon la revendication précédente, dans lequel on utilise un manchon dans lequel la zone de moindre résistance mécanique (3a, 3b) est formée avec deux lignes de piqûres parallèles entre elles définissant une bande frangible (4).

7. Procédé selon la revendication précédente, dans lequel on utilise un manchon dans lequel le corps creux (1) comprend une languette (5) de traction de la bande frangible (4).

8. Procédé selon l'une quelconque des revendications 4 à 7, dans lequel on utilise un manchon dans lequel la zone de moindre résistance mécanique (3a, 3b) s'étend intégralement entre la première extrémité et la deuxième extrémité.

9. Outil pour la pose d'un manchon pour manche (21) d'accessoire de sport tel qu'une raquette (20), le manchon comprenant un corps creux (1) dont le volume intérieur est débouchant à une première extrémité et une deuxième extrémité du corps creux (1) autour et au contact d'un manche (21) présentant une dimension radiale, l'outil comprenant une pluralité de branches (11) configurées pour recevoir le corps creux du manchon par enfilement autour des branches, **caractérisé en ce qu'**il comprend un dispositif de déplacement simultané des branches configuré pour faire varier leur écartement au moins entre une position de rapprochement des branches et une position d'éloignement des branches, de sorte à faire varier la dimension radiale du corps creux en variant l'écartement des branches (11) et produire une expansion radiale du corps creux au-delà de la dimension radiale du manche (21) dans la position d'éloignement des branches, et dans lequel le dispositif de déplacement comprend deux bras (12) manipulables et montés pivotants, et reliés aux branches (11) par un système de transmission de mouvement (13).

10. Outil selon la revendication précédente, dans lequel, dans la position de rapprochement, les extrémités distales des branches (11) sont jointives.

11. Outil selon la revendication précédente, dans lequel, dans la position de rapprochement, les branches (11) vont en s'évasant depuis leurs extrémités distales.

12. Outil selon l'une quelconque des deux revendications précédentes, dans lequel le dispositif de déplacement est configuré pour déplacer radialement les extrémités distales des branches (11) pour passer de la position de rapprochement à la position d'éloignement.

13. Outil selon l'une quelconque des revendications 9 à 12, dans lequel les branches (11) sont parallèles entre-elles dans la position d'éloignement.

14. Outil selon l'une quelconque des revendications 9 à 13, dans lequel le dispositif de déplacement comprend un démultiplicateur configuré pour qu'une manipulation des bras (12) selon un angle prédéterminé produise un déplacement plus important des branches (11).

## Patentansprüche

1. Verfahren zur Verwendung einer Hülse für einen Griff (21) für Sportzubehör wie beispielsweise einen Schläger (20), wobei der Griff (21) eine radiale Abmessung umfasst, wobei die Hülse einen Hohlkörper (1) umfasst, dessen Innenvolumen in ein erstes Ende und ein zweites Ende des Hohlkörpers (1) mündet, wobei das Verfahren weiter ein Anbringen des Hohlkörpers (1) um einen Griff (21) herum und in Kontakt damit umfasst, wobei das Anbringen umfasst:
• Verwenden eines Werkzeugs (10) nach einem der Ansprüche 9 bis 14, das eine Vielzahl von Schenkeln (11) und eine Vorrichtung zum Verschieben der Schenkel umfasst, die konfiguriert ist, um gleichzeitig deren Abstand mindestens zwischen einer Annäherungsposition der Schenkel (11) zueinander und einer Entfernungsposition der Schenkel (11) voneinander variieren zu lassen; danach
• in der Annäherungsposition der Schenkel (11) zueinander, Platzieren des Hohlkörpers (1) um die Schenkel (11) herum und in Kontakt damit; danach
• Umstellen der Schenkel (11) in die Entfernungsposition voneinander, bevor die Hülse auf den Griff (21) geschoben wird, wodurch eine radiale Ausdehnung des Hohlkörpers (1) über die radiale Abmessung des Griffs (21) hinaus erfolgt; danach
• Aufschieben der Schenkel (11) um den Griff (21) herum, unter Belassen des Hohlkörpers (1) in der Entfernungsposition auf den Schenkeln (11); danach
• Verringern des Abstands der Schenkel (11), danach schrittweises Inkontaktbringen des Hohlkörpers und des Griffs bei gleichzeitiger Rückzugsbewegung der Schenkel (11) in Bezug zum Griff (21).

2. Verfahren nach dem vorstehenden Anspruch, wobei eine Rückhaltekraft des distalen Endes der Hülse zu Beginn der Rückzugsbewegung der Schenkel (11) in Bezug zum Griff (21) ausgeübt wird, um die Hülse am Griff (21) zurückzuhalten.

3. Verfahren nach einem der vorstehenden Ansprüche, wobei das Aufschieben der Schenkel (11) um den Griff (21) kontaktlos zwischen dem Griff und den Schenkeln (11) erfolgt.

4. Verfahren nach einem der vorstehenden Ansprüche, wobei eine Hülse verwendet wird, in welcher der Hohlkörper (1) mindestens einen Bereich mit geringerer mechanischen Festigkeit (3a, 3b) umfasst, der sich von einem aus dem ersten Ende und dem zweiten Ende in Richtung des anderen von dem ersten Ende und dem zweiten Ende erstreckt, wobei das Verfahren nach dem Inkontaktbringen das Zurückziehen des Hohlkörpers (1) in Bezug zum Griff (21) umfasst, das einen Bruch des mindestens einen Bereichs mit der geringerer mechanischen Festigkeit (3a, 3b) umfasst, um den Hohlkörper (1) zu öffnen.

5. Verfahren nach dem vorstehenden Anspruch, wobei eine Hülse verwendet wird, in welcher der Bereich mit geringerer mechanischer Festigkeit (3a, 3b) mindestens eine Nahtlinie in der Dicke des Hohlkörpers (1) umfasst.

6. Verfahren nach dem vorstehenden Anspruch, wobei eine Hülse verwendet wird, in welcher der Bereich mit geringerer mechanischer Festigkeit (3a, 3b) mit zwei parallel zueinander verlaufenden Nahtlinien gebildet wird, die ein brechbares Band (4) definieren.

7. Verfahren nach dem vorstehenden Anspruch, wobei eine Hülse verwendet wird, in welcher der Hohlkörper (1) eine Zuglasche (5) des brechbaren Bandes (4) umfasst.

8. Verfahren nach einem der Ansprüche 4 bis 7, wobei eine Hülse verwendet wird, in der sich der Bereich mit geringerer mechanischer Festigkeit (3a, 3b) vollständig zwischen dem ersten Ende und dem zweiten Ende erstreckt.

9. Werkzeug zum Anbringen einer Hülse für einen Griff (21) für Sportzubehör wie beispielsweise einen Schläger (20), wobei die Hülse einen Hohlkörper (1) umfasst, dessen Innenvolumen in ein erstes Ende und ein zweites Ende des Hohlkörpers (1) um einen Griff (21) herum und in Kontakt damit mündet, der eine radiale Abmessung aufweist, wobei das Werkzeug eine Vielzahl von Schenkeln (11) umfasst, die konfiguriert sind, um den Hohlkörper der Hülse durch Aufschieben um die Schenkel herum aufzunehmen, **dadurch gekennzeichnet, dass** es eine Vorrichtung zum gleichzeitigen Verschieben der Schenkel umfasst, die konfiguriert ist, um deren Abstand mindestens zwischen einer Annäherungsposition der Schenkel zueinander und einer Entfernungsposition der Schenkel voneinander variieren zu lassen, um die radiale Abmessung des Hohlkörpers durch Variieren des Abstands der Schenkel (11) variieren zu lassen, und eine radiale Ausdehnung des Hohlkörpers über die radiale Abmessung des Griffs (21) in der Entfernungsposition der Schenkel hinaus erfolgt, und wobei die Vorrichtung zum Verschieben zwei manipulierbare und schwenkbar montierte Arme (12) umfasst, die durch ein Bewegungsübertragungssystem (13) mit den Schenkeln (11) verbunden sind.

10. Werkzeug nach dem vorstehenden Anspruch, wobei die distalen Enden der Schenkel (11) in der Annäherungsposition zueinander aneinander anliegen.

11. Werkzeug nach dem vorstehenden Anspruch, wobei sich die Schenkel (11) in der Annäherungsposition zueinander von ihren distalen Enden aus ausweiten.

12. Werkzeug nach einem der beiden vorstehenden Ansprüche, wobei die Vorrichtung zum Verschieben konfiguriert ist, um die distalen Enden der Schenkel (11) radial zu verschieben, um von der Annäherungsposition zueinander in die Entfernungsposition voneinander umgestellt zu werden.

13. Werkzeug nach einem der Ansprüche 9 bis 12, wobei die Schenkel (11) in der Entfernungsposition voneinander parallel zueinander stehen.

14. Werkzeug nach einem der Ansprüche 9 bis 13, wobei die Vorrichtung zum Verschieben ein Untersetzungsgetriebe umfasst, das konfiguriert ist, sodass eine Manipulation der Arme (12) gemäß einem vorbestimmten Winkel eine größere Verschiebung der Schenkel (11) erzeugt.

## Claims

1. Method of using a sleeve for a sports accessory handle (21) such as a racket (20), the handle (21) comprising a radial dimension, the sleeve comprising a hollow body (1) the inner volume of which opens at a first end and a second end of the hollow body (1), the method further comprising positioning the hollow body (1) around and in contact with a handle (21), wherein the positioning comprises:
• using a tool (10) according to any one of claims 9 to 14 comprising a plurality of branches (11) and a device for moving the branches configured to simultaneously vary their spacing at least between a position for bringing the branches (11) together and a position for moving the branches (11) apart; then
• in the position for bringing the branches (11) together, positioning the hollow body (1) around and in contact with the branches (11); then
• passing the branches (11) in the moved-apart position, before fitting the sleeve onto the handle (21), producing a radial expansion of the hollow body (1) beyond the radial dimension of the handle (21); then
• fitting the branches (11) around the handle (21) while leaving the hollow body (1) in place on the branches (11) in the moved-apart position; then
• reducing the spacing of the branches (11), then progressively bringing the hollow body and the handle into contact during a simultaneous withdrawal movement of the branches (11) relative to the handle (21).

2. Method according to the preceding claim, wherein a retention force is exerted from the distal end of the sleeve at the start of the withdrawal movement of the branches (11) relative to the handle (21) so as to retain the sleeve on the handle (21).

3. Method according to either of the preceding claims, wherein the fitting of the branches (11) around the handle (21) is carried out without any contact between the handle and the branches (11).

4. Method according to any one of the preceding claims, wherein a sleeve is used in which the hollow body (1) comprises at least one area of less mechanical resistance (3a, 3b) extending from one of the first end and the second end towards the other of the first end and the second end, the method comprising, after bringing into contact, a retraction of the hollow body (1) relative to the handle (21), comprising a break in at least one area of lower mechanical resistance (3a, 3b) so as to open the hollow body (1).

5. Method according to the preceding claim, wherein a sleeve is used in which the area of less mechanical resistance (3a, 3b) comprises at least one line of perforations in the thickness of the hollow body (1).

6. Method according to the preceding claim, wherein a sleeve is used in which the area of less mechanical resistance (3a, 3b) is formed with two lines of perforations parallel to each other defining a frangible band (4).

7. Method according to the preceding claim, wherein a sleeve is used, in which the hollow body (1) comprises a tongue (5) for pulling the frangible band (4).

8. Method according to any one of claims 4 to 7, wherein a sleeve is used in which the area of less mechanical resistance (3a, 3b) extends integrally between the first end and the second end.

9. Tool for fitting a sleeve onto the handle (21) of a sports accessory such as a racket (20), the sleeve comprising a hollow body (1) the inner volume of which opens at a first end and a second end of the hollow body (1) around and in contact with a handle (21) having a radial dimension, the tool comprising a plurality of branches (11) configured to receive the hollow body of the sleeve by fitting around the branches, **characterised in that** it comprises a device for simultaneously moving the branches, configured to vary their spacing at least between a position for bringing the branches together and a position for moving the branches apart, so as to vary the radial dimension of the hollow body by varying the spacing of the branches (11) and to produce a radial expansion of the hollow body beyond the radial dimension of the handle (21) in the position for moving the branches apart, and wherein the displacement device comprises two operable and pivotably mounted arms (12), and connected to the branches (11) by a movement transmission system (13).

10. Tool according to the preceding claim, wherein, in the moved-together position, the distal ends of the branches (11) are in abutment.

11. Tool according to the preceding claim, wherein, in the moved-together position, the branches (11) splay from their distal ends.

12. Tool according to any one of the two preceding claims, wherein the displacement device is configured to radially displace the distal ends of the branches (11) to move from the moved-together position to the spaced-apart position.

13. Tool according to any one of claims 9 to 12, wherein the branches (11) are parallel to each other in the spaced-apart position.

14. Tool according to any one of claims 9 to 13, wherein the displacement device comprises a reducing gear configured so that manipulation of the arms (12) at a predetermined angle produces a greater displacement of the branches (11).
